# EUROPEAN PATENT APPLICATION

(11) **EP 4 668 070 A1**
(43) Date of publication of application: **24.12.2025**
(21) Application number: 25183791.0
(22) Date of filing: 18.06.2025
(51) Int. Cl.: G06F 3/0354, H01F 1/34, C04B 35/26

(54) **FERRITE CORE AND STYLUS PEN INCLUDING THE SAME**

(30) Priority: 18.06.2024 KR 20240078671; 14.08.2024 KR 20240108947
(71) Applicant: Hideep Inc., Seongnam-si, Gyeonggi-do 13493 (KR)
(72) Inventor: LEE, Byung-kun, 13493 Gyeonggi-do (KR); BYUN, Mun Sub, 13493 Gyeonggi-do (KR)
(74) Representative: HGF

(57) **Abstract**

The present disclosure relates to a ferrite core and a stylus pen including the same, and more particularly, to a ferrite core capable of improving an effect of magnetization caused by an external magnetic body and a stylus pen including the same.

The ferrite core according to an embodiment of the present disclosure, which is mounted in the stylus pen, includes 60 to 80 wt% of iron (Fe), 15 to 30 wt% of manganese (Mn), and 3 to 20 wt% of zinc (Zn).

## Description

### BACKGROUND

The present disclosure relates to a ferrite core and a stylus pen including the same, and more particularly, to a ferrite core capable of improving an effect of magnetization caused by an external magnetic body and a stylus pen including the same.

A stylus pen is a pen-shaped device capable of inputting data by lightly touching a screen while dragging or clicking on the screen.

The stylus pen may be classified into an active stylus pen and a passive stylus pen depending on whether the stylus pen includes a battery and an electronic component therein.

Although the passive stylus pen has an advantage in that the passive stylus pen is inexpensive and does not require a battery in comparison with the active stylus pen, the passive stylus pen has a disadvantage in that the passive stylus pen is difficult to recognize a precise touch in comparison with the active stylus pen. In recent years, however, an electro magnetic resonance (EMR) method has been used to realize a passive stylus pen capable of recognizing a precise touch.

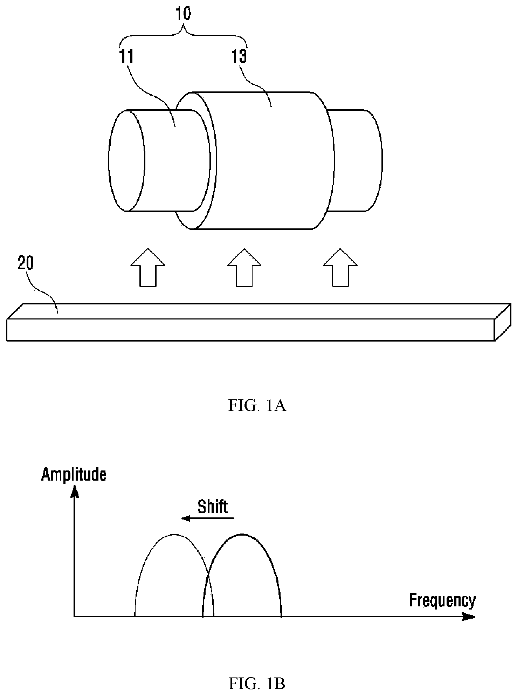

FIG. 1A is a schematic view illustrating an inductor unit 10 of a conventional EMR stylus pen and an external magnetic body 20 that affects the inductor unit 10, and FIG. 1B is a graph for explaining how a resonance frequency of a resonant circuit unit of the conventional EMR stylus pen is changed by the external magnetic body 20 illustrated in FIG. 1A.

Referring to FIG. 1A, the conventional EMR stylus pen has a resonant circuit unit (not shown) including a capacitor unit (not shown) and the inductor unit 10.

As illustrated in FIG. 1A, the inductor unit 10 includes a ferrite core 11 and a coil 13 wound around an outer surface of the ferrite core 11 to form a magnetic field. The conventional ferrite core 11 is made of a nickel-manganese (Ni-Mn)-based material.

The inductor unit 10 is magnetized by the magnetic body 20 disposed adjacent thereto. Specifically, as characteristics of the ferrite core 11 are changed by the external magnetic body 20, an inductance of the inductor unit 10 is changed.

As illustrated in FIG. 1B, the changed inductance shifts the resonance frequency of the resonant circuit unit, and this change of the resonance frequency causes degradation in performance of an input system.

Korean Patent Publication No. 10-2024-0054830 (hereinafter, referred to as "patent document 1") discloses a foldable electronic device 1. First and second magnetic bodies 61 and 62 are arranged at edge portions of a first frame 111 and a second frame 111 in the foldable electronic device 1. In a folded state of the foldable electronic device 1, the first magnetic body 61 and the second magnetic body 62 overlap each other, and an attractive force therebetween reduces a phenomenon in which a first housing 11 and a second housing 12 are separated from each other. When the inductor unit 10 in FIG. 1A is disposed adjacent to the first and second magnetic bodies 61 and 62, the ferrite core of the inductor unit 10 is magnetized to cause a change in the resonance frequency.

On the other hand, magnetic bodies such as laptops, scissors, smartwatches, and tweezers exist even in objects and environments of daily life. The above-described magnetic bodies may also magnetize the inductor unit of the stylus pen.

### SUMMARY

The present disclosure provides a ferrite core capable of improving an effect of magnetization caused by an external magnetic body and a stylus pen including the same.

An embodiment of the present disclosure provides a ferrite core mounted in a stylus pen, the ferrite core including 60 to 80 wt% of iron (Fe), 15 to 30 wt% of manganese (Mn), and 3 to 20 wt% of zinc (Zn).

In an embodiment of the present disclosure, a stylus pen includes: a housing; a core body having one end disposed outside the housing and the rest disposed in the housing and moved along a longitudinal direction by external force applied to the one end; an inductor unit including a ferrite core disposed in the housing and having a through-hole through which the core body passes and a coil wound around an outer surface of the ferrite core; a fixing bracket fixed in the housing and coupled to the other end of the ferrite core; and a moving bracket disposed in the fixing bracket, surrounding the other end of the core body, and connected with the core body to be synchronized with a movement of the core body, in which the ferrite core includes 60 to 80 wt% of iron (Fe), 15 to 30 wt% of manganese (Mn), and 3 to 20 wt% of zinc (Zn).

### BRIEF DESCRIPTION OF THE FIGURES

FIG. 1A is a schematic view illustrating an inductor unit 10 of a conventional EMR stylus pen and an external magnetic body 20 that affects the inductor unit 10;
FIG. 1B is a graph for explaining how a resonance frequency of a resonant circuit unit of the conventional EMR stylus pen is changed by the external magnetic body 20 illustrated in FIG. 1A;
FIG. 2 is a graph showing a variation in resonance frequency caused by an effect of magnetization of each of an EMR stylus pen (hereinafter, referred to as an embodiment stylus pen) having a ferrite core according to an embodiment of the present invention and an EMR stylus pen (hereinafter, referred to as a conventional stylus pen) having a conventional ferrite core.
FIG. 3 is a perspective view illustrating a stylus pen 100 according to an embodiment of the present disclosure;
FIG. 4 is a cross-sectional view illustrating the stylus pen 100 in FIG. 3;
FIG. 5 is a detailed cross-sectional view illustrating an inductor unit 120 in FIG. 4;
FIGS. 6A and 6B are views for explaining an inner configuration of the stylus pen in FIGS. 4 and 5 and an effect caused by the inner configuration according to an embodiment of the present disclosure;
FIGS. 7A to 7C are views for explaining in more detail an inner configuration of the stylus pen in FIGS. 4 and 5 and an effect caused by the inner configuration according to an embodiment of the present disclosure;
FIG. 8 is a view for explaining an amount of increase in magnitude of a pen signal according to a predetermined height S in FIGS. 7A to 7C;
FIG. 9 is a perspective view of a modified example of a ferrite core 121 in FIGS. 4 to 5;
FIG. 10 is an enlarged front view illustrating a portion of a ferrite core 121' in FIG. 9, and a cross-sectional view taken along line A-A';
FIG. 11 is a cross-sectional view illustrating a stylus pen to which another modified example of the ferrite core 121 in FIG. 4 is applied;
FIG. 12 is a cross-sectional view illustrating only a ferrite core 121" and a coil 123 in FIG. 11;
FIG. 13 is a perspective view illustrating a ferrite core 121" in FIGS. 11 to 12;
FIG. 14 is an enlarged front view illustrating a portion of the ferrite core 121" in FIG. 13, and a cross-sectional view taken along line B-B';
FIG. 15 is a perspective view illustrating a stylus pen 1000 according to another embodiment of the present disclosure;
FIG. 16 is a cross-sectional view illustrating a portion of the stylus pen 10000 in FIG. 15;
FIG. 17 is a perspective view illustrating a state in which a housing 1010 of the stylus pen 1000 in FIG. 15 is removed;
FIG. 18 is a perspective view illustrating only a fixing bracket 1600 in FIG. 17;
FIG. 19 is a perspective view illustrating the fixing bracket 1600 in FIG. 18 viewed from a different direction;
FIG. 20 is a perspective view illustrating a portion of FIG. 17 viewed from a different direction;
FIG. 21 is a perspective view illustrating a state in which an inductor unit 1200 and a fixing bracket 1600 in FIG. 17 are removed;
FIG. 22 is a perspective view illustrating FIG. 21 viewed from a different direction;
FIG. 23 is a cross-sectional view of FIG. 21;
FIG. 24 is perspective views illustrating only an elastic member 1800 in FIG. 21;
FIG. 25 is a perspective view illustrating a substrate bracket 1900 and a substrate 2100 in FIG. 21;
FIGS. 26A and 26B are a view for explaining a movement of a moving bracket 1300 according to a movement of a core body 1020 in FIGS. 17 to 25, and an electrical contact and disconnection between the fixing bracket 1600 and the moving bracket 1300;
FIGS. 27A and 27B are schematic views illustrating FIGS. 26A and 26B, respectively;
FIGS. 28A to 28C are a schematic view illustrating a stylus pen according to another embodiment of the present disclosure and showing equivalent circuit diagrams of FIGS. 26A and 26B;
FIG. 29 is a perspective view illustrating a stylus pen 1000 in FIG. 15 according to another embodiment of the present disclosure viewed from the core body 1020;
FIGS. 30A and 30B are a partial cross-sectional view obtained by cutting the stylus pen 1000 along lines A-A' and B-B' in FIG. 29;
FIG. 31 is a view illustrating cross-sectional views and side views of a ferrite core 1210 in FIGS. 29 to 30B;
FIG. 32 is a view for explaining a modified example of the ferrite core 1210 in FIG. 31; and
FIG. 33 is a perspective view illustrating an inductor unit 1200' in which a coil 1230' is wound around an outer surface of the ferrite core 1210' illustrated in FIG. 32.

### DETAILED DESCRIPTION

The present invention will now be described more fully with reference to the accompanying drawings, in which exemplary embodiments of the invention are shown. These embodiments are provided so that this disclosure will be thorough and complete, and will fully convey the concept of the invention to those skilled in the art. The invention may, however, be embodied in many different forms and should not be construed as being limited to the embodiments set forth herein. Therefore, it will be understood that the embodiments disclosed in this specification includes some variations without limitations to the shapes as illustrated in the figures. Also, the position or the arrangement of each component in the embodiment may be varied without departing form the spirit or scope of the invention. The preferred embodiments should be considered in descriptive sense only and not for purposes of limitation. Therefore, the scope of the invention is defined not by the detailed description of the invention but by the appended claims, and all differences within the scope will be construed as being included in the present invention. In the drawings, reference numerals refer to like elements throughout.

A ferrite core according to an embodiment of the present disclosure may improve an effect of magnetization caused by an external magnetic body.

Particularly, the ferrite core according to an embodiment of the present disclosure may have various shapes. For example, the ferrite core may have a cylindrical shape as illustrated in FIGs. 1A and 1B. Also, the ferrite core may have a shape corresponding to that of each of ferrite cores in stylus pens according to various embodiments, which will be described later. However, the embodiment of the present disclosure is not limited to the shape of the ferrite core.

The ferrite core according to an embodiment of the present disclosure includes iron (Fe), manganese (Mn), and zinc (Zn).

The ferrite core includes 60 to 80 wt% of iron (Fe), 15 to 30 wt% of manganese (Mn), and 3 to 20 wt% of zinc (Zn). Here, the ferrite core may include 70 wt% of iron (Fe), 18 wt% of manganese (Mn), and 12 wt% of zinc (Zn).

The ferrite core may include iron (Fe), manganese (Mn), and zinc (Zn), each of which has the above-described composition range at a firing temperature of 800°C to 1800°C.

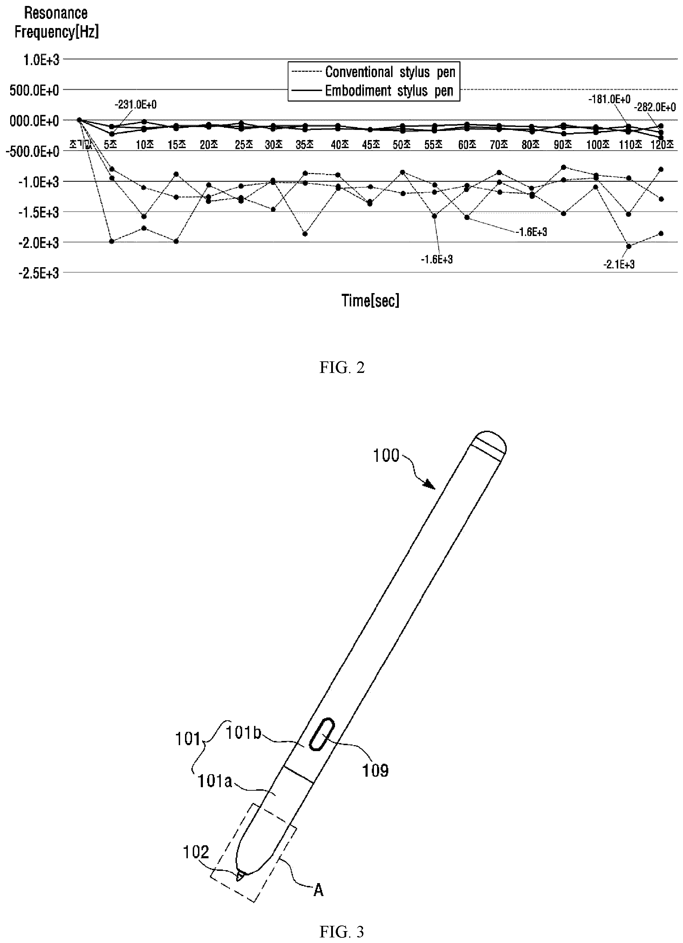

FIG. 2 is a graph showing a variation in resonance frequency caused by an effect of magnetization of each of an EMR stylus pen (hereinafter, referred to as an embodiment stylus pen) having a ferrite core according to an embodiment of the present invention and an EMR stylus pen (hereinafter, referred to as a conventional stylus pen) having a conventional ferrite core.

The graph of FIG. 2 is obtained by performing tests for the embodiment stylus pen and the conventional stylus pen under the same condition except for the ferrite core. Three embodiment stylus pens and three conventional stylus pens are forcibly magnetized under the same condition by using the external magnetic body 20 in FIG. 1. In the graph of FIG. 2, a horizontal axis represents time (Time [sec]), and a vertical axis represents resonance frequency (Resonance Frequency [Hz]).

Referring to FIG. 2, it may be known that the three embodiment stylus pens show relatively extremely small variations in resonance frequency despite being subjected to forced magnetization, and the resonance frequency remains substantially constant regardless of time. On the other hand, it may be known that the three respective conventional stylus pens show different variations in resonance frequency over time and different magnetization behaviors.

Through the above-described results, it may be known that almost no variation in resonance frequency caused by the magnetization is generated because the effect of the magnetization is improved by one or more of a material, a composition ratio, and a firing temperature of the ferrite core according to an embodiment of the present disclosure.

Hereinafter, the stylus pen including the ferrite core according to the above-described embodiment of the present disclosure will be described with reference to the accompanying drawings.

FIG. 3 is a perspective view illustrating a stylus pen 100 including a ferrite core according to an embodiment of the present disclosure.

Referring to FIG. 3, the stylus pen 100 including the ferrite core according to an embodiment of the present disclosure includes a housing 101, a core body 102, and a ferrite core (not shown) disposed in the housing 101.

The housing 101 forms an outer shape of the stylus pen 100. The housing 101 includes an inner predetermined space and has an elongated shape in one direction. The housing 101 may be formed such that two or more parts are coupled to each other or integrated into one piece.

The housing 101 may be made of a non-conductive synthetic resin material.

The housing 101 may include a first housing 101a and a second housing 101b. The first housing 101a and the second housing 101b may be coupled to each other to form the appearance of the stylus pen 100. Various components are embedded in the first housing 101a and the second housing 101b.

A button unit 109 may be disposed on the housing 101. The button unit 109 may be disposed at a middle portion of an outer surface of the second housing 101b. The button unit 109 is designed to perform a specific operation of the stylus pen 100. For example, the button unit 109 may be a mechanical or touch-type button used for a cancel operation.

The core body 102 includes one end that is disposed outside the housing 101, and the rest portion except the one end is disposed in the housing 101. Here, the one end of the core 102 may be referred to as a pen tip.

One portion of the one end of the core 102 may be moved into the housing 101 by external force applied from the outside. As the external force increases, a volume of the one portion of the one end of the core 102, which is moved into the housing 101, may increase. When the applied external force decreases, the one portion of the one end of the core 102 moves out of the housing 101 by a mechanical operation of components in the housing 101. When the external force is not applied, the one portion of the one end of the core 102 is returned to an original state.

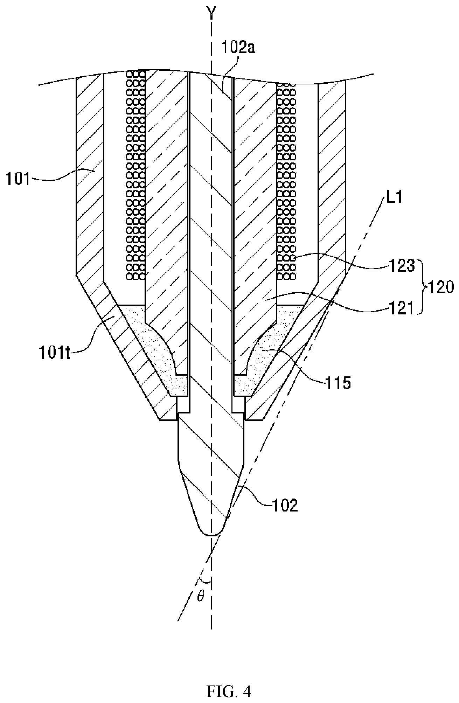

Hereinafter, an inner structure of the housing 101 will be described with reference to FIGS. 4 to 5.

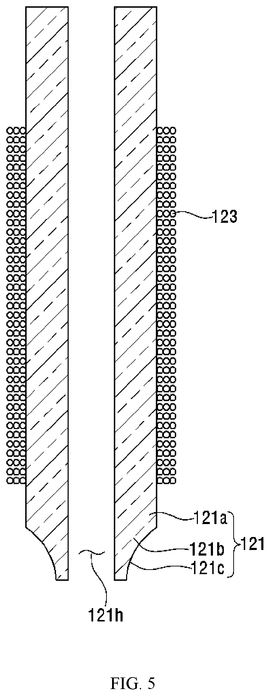

FIG. 4 is a cross-sectional view illustrating portion A of the stylus pen 100 in FIG. 3, and FIG. 5 is a detailed cross-sectional view illustrating an inductor unit 120 in FIG. 4.

Referring to FIGS. 4 and 5, the stylus pen 100 according to an embodiment of the present disclosure includes a buffer member 115, an inductor unit 120, and a capacitor unit (not shown), which are disposed in the housing 101.

The buffer member 115 is disposed in the housing 101 and disposed between one end of a ferrite core 121 and an inner surface of the housing 101. The buffer member 115 may be disposed in a tapered portion 101t of the housing 101. The tapered portion 101t of the housing 101, which is adjacent to the one end of the core 102 among both ends of the housing 101, has a shape having a width or diameter that gradually decreases in a direction toward an end of the one end of the housing 101.

The buffer member 115 has a cone shape or a polygonal pyramid shape and includes a through-hole through which one end of the ferrite core 121 and a body 102a of the core 102 pass. An inner surface of the through-hole may have a shape corresponding to an outer surface of the one end of the ferrite core 121 and an outer surface of the body 102a of the core 102. Here, the body 102a of the core 102 refers to a portion, which is disposed in the through-hole of the ferrite core 12, in the core 102 having an elongated shape in one direction.

The buffer member 115 may be made of an elastic material such as rubber to serve as a buffer between the ferrite core 121 and the housing 101. The buffer member 115 may protect the housing 101 and the ferrite core 121 or block a mechanical impact from the outside.

The buffer member 115 has a shape that surrounds one end or a lower end 121b of the ferrite core 121.

A virtual tangent line L1 that contacts, in common, the tapered portion 101t of the housing 101 and the portion (or pen tip) disposed outside the housing in the core 102 forms a predetermined angle θ with a central axis Y of the core 102. Here, the predetermined angle θ may be less than 30°. When the predetermined angle θ is less than 30°, a drawing may be performed even in a state in which the stylus pen according to an embodiment of the present disclosure is inclined at 60° based on a contact surface.

The inductor unit 120 may constitute an LC resonant unit with a capacitor unit (not shown). A resonance frequency may be set by a value of inductance L of the inductor unit 120 and a value of capacitance C of the capacitor unit (not shown). This resonance frequency may be varied according to variation in the value of the inductance L of the inductor unit 120 or the value of the capacitance C of the capacitor unit (not shown).

The inductor unit 120 includes a ferrite core 121 and a coil 123 wound around an outer surface of the ferrite core 121.

At least one layer of the coil 123 may be wound around the ferrite core 121.

The ferrite core 121 may have an overall cylindrical or polygonal container shape, and a through-hole 121h that passes through the inside of the ferrite core 121 may be formed along a longitudinal direction of the ferrite core 121.

The ferrite core 121 may include iron (Fe), manganese (Mn), and zinc (Zn).

The ferrite core 121 includes 60 to 80 wt% of iron (Fe), 15 to 30 wt% of manganese (Mn), and 3 to 20 wt% of zinc (Zn). Here, the ferrite core 121 may include 70 wt% of iron (Fe), 18 wt% of manganese (Mn), and 12 wt% of zinc (Zn).

The ferrite core 121 may include iron (Fe), manganese (Mn), and zinc (Zn), each of which has the above-described composition range at a firing temperature of 800°C to 1800°C.

As described in FIG. 2, there is an advantage in that the resonance frequency of the LC resonant unit is almost not varied due to the improved magnetization despite the magnetization caused by the external magnetic body by at least one of the material, the composition ratio, and the firing temperature of the ferrite core 121.

The ferrite core 121 has the through-hole 121h through which the body 102a of the core 102 passes. The body 102a of the core 102 may perform a linear reciprocating movement along a longitudinal direction through the through-hole 121h.

One end of the ferrite core 121 may have a tapered shape having a diameter or width that gradually decreases in a direction toward an end thereof. Here, an outer surface of the one end having the tapered shape may include at least one curved portion 121c that is curved inward.

The ferrite core 121 may include an upper end 121a and a lower end 121b disposed below the upper end 121a. Here, the upper end 121a and the lower end 121b may be integrated with each other.

The upper end 121a has a cylindrical, elliptical, or polygonal container shape. Here, the cylindrical or polygonal container shape may have a constant diameter or width as illustrated in the drawing. Alternatively, the cylindrical, elliptical, or polygonal container shape may not have a constant diameter or width, and one portion may have a diameter or width different from that of another portion.

A portion of the through-hole 121h through which the body 102a of the core 102 passes is formed in the upper end 121a. The coil 123 is disposed on an outer surface of the upper end 121a.

The rest portion of the through-hole 121h through which the body 102a of the core 102 passes is formed in the lower end 121b.

The lower end 121b has a tapered shape having a width that gradually decreases in a direction from top to bottom. Here, at least a portion of an outer surface of the lower end 121b has a curved portion 121c that is curved into the lower end 121b. At least one curved portion 121c may be provided. A technical effect of the stylus pen including the ferrite core 121 having the above-described curved portion 121c according to an embodiment of the present disclosure will be described below with reference to the drawings.

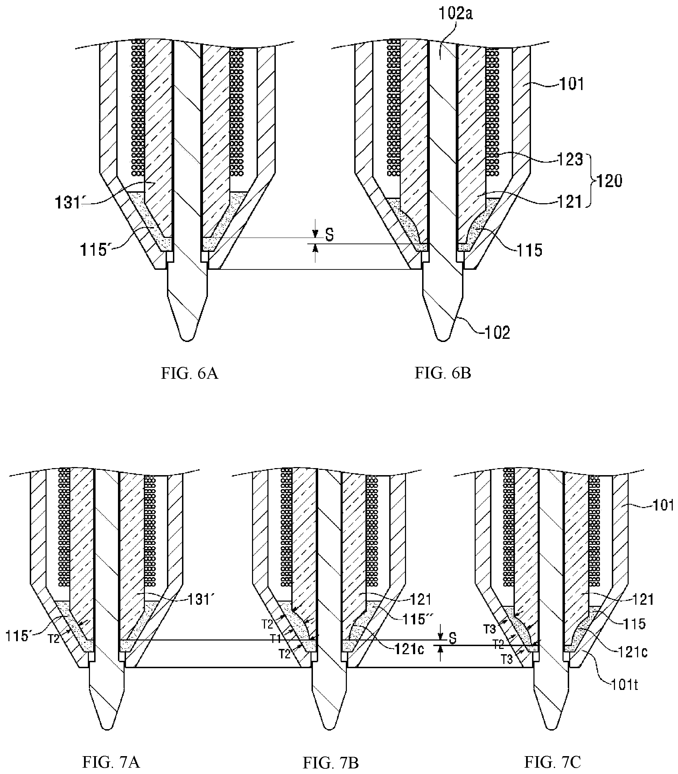

FIGS. 6A and 6B are views for explaining an inner configuration of the stylus pen in FIGS. 4 and 5 and an effect caused by the inner configuration according to an embodiment of the present disclosure Specifically, FIG. 6B is a cross-sectional view illustrating the stylus pen according to an embodiment of the present disclosure in FIGS. 4 and 5, and FIG. 6A is a cross-sectional view illustrating a case in which the ferrite core 121 in FIG. 6B is replaced with the ferrite core 131' illustrated at a right side of FIG. 6A.

Referring to FIGS. 6A and 6B, the stylus pen according to an embodiment of the present disclosure in FIG. 6B may include the ferrite core 121 that is disposed lower by a predetermined length S than the ferrite core 131' in FIG. 6A.

According to this configuration, when the stylus pen according to an embodiment of the present disclosure is used, the inductor unit 120 including the ferrite core 121 may be disposed closer to a receiver (not shown) disposed below the core 102 of the stylus pen. Thus, there is an advantage in that a magnitude of a pen signal detected by the receiver increases. This is because a thickness (between inner and outer surfaces) of the buffer member 115 may be reduced by a shape of the ferrite core 121 of the stylus pen according to an embodiment of the present disclosure. Hereinafter, this will be described below with reference to FIGS. 7A to 7C.

FIGS. 7A to 7C are views for explaining in more detail an inner configuration of the stylus pen in FIGS. 4 and 5 and an effect caused by the inner configuration according to an embodiment of the present disclosure; Specifically, FIG. 7A is the same as FIG. 6A, FIG. 7B is the same as FIG. 6B, and FIG. 7C is a view illustrating a case in which the ferrite core 121 is disposed at the same position as the ferrite core 131' in FIG. 7A.

Referring to FIG. 7A, the buffer member 115' has a constant thickness T2 between inner and outer surfaces thereof. As the thickness T2 is gradually minimized, the ferrite core 131' may move as low as possible in the tapered portion 101t of the housing 101. However, the thickness T2 has a limitation due to a structure of the buffer member 115' or other manufacturing processes.

Here, when it is assumed that the thickness T2 is a minimum thickness of the buffer member 115' due to the structure of the buffer member 115' or other manufacturing processes, FIG. 7A shows a case in which the conventional ferrite core 131' is disposed at a lowest position in the housing 101.

Referring to FIG. 7C, the ferrite core 121 is disposed at the same position as the ferrite core 131' in FIG. 7A. Here, since the ferrite core 121 has the curved portion 121c, the buffer member 115" is different in configuration from the buffer member 115' in FIG. 7A. Specifically, an inner surface of the buffer member 115" has a protruding curved surface in correspondence to the curved portion 121c of the ferrite core 121.

A thickness between an outer surface and the curved inner surface of the buffer member 115" is varied according to positions. Specifically, each of upper and lower ends of the inner surface of the buffer member 115" has the minimum thickness T2 from the outer surface, an intermediate portion of the inner surface of the buffer member 115" has a thickness between T2 and T1 (where, T1 > T2).

In FIG. 7C, at least one portion (upper and lower ends) of the buffer member 115" satisfies the minimum thickness T2, and the intermediate portion of the buffer member 115" has the thickness T1 greater than the minimum thickness T2. As described above, since the thickness T1 of the intermediate portion of the buffer member 115" is greater than the minimum thickness T2, there is an advantage in that the buffer member 115" is easier to manufacture than the conventional buffer member 115' in FIG. 7A.

Referring to FIG. 7B, an inner surface of the buffer member 115 is formed into a curved surface by the curved portion 121c of the ferrite core 121. Each of upper and lower ends of the inner surface of the buffer member 115 has a thickness T3 (T3<T2) from the outer surface of the buffer member 115, and an intermediate portion of the inner surface of the buffer member 115 has a thickness between T3 and T2 from the outer surface of the buffer member 115.

In FIG. 7B, although the upper and lower ends of the buffer member 115 do not satisfy the minimum thickness T2, since the intermediate portion of the buffer member 115 satisfies the minimum thickness T2, the buffer member 115 may be manufactured. Since the buffer member 115 manufactured as described above has the minimum thickness less than that of each of the buffer members 115' and 115" in FIGS. 7A and 7C, a volume of the buffer member 115 may be further reduced. Thus, the buffer member 115 may move further downward in the tapered portion 101t of the housing 101. Accordingly, the ferrite core 121 may be disposed lower by a predetermined height S than those in FIGS. 7A and 7C.

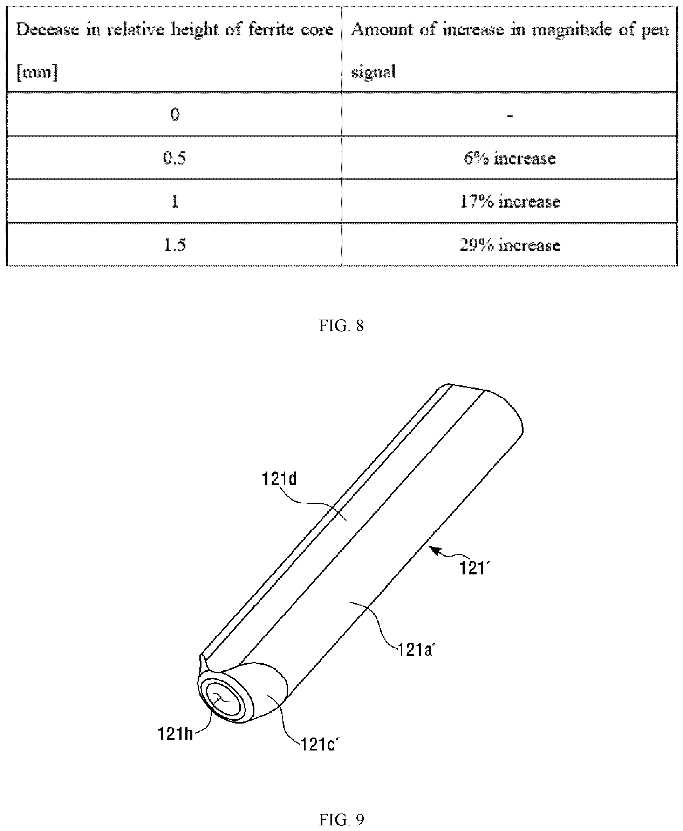

FIG. 8 is a view for explaining an amount of increase in magnitude of a pen signal according to the predetermined height S in FIGS. 7A and 7C.

Referring to a table in FIG. 8, it may be known that the magnitude of the pen signal increases as the predetermined height S increases.

As described above, the stylus pen 100 according to an embodiment of the present disclosure in FIGS. 4 to 7 may reduce the thickness of the buffer member 115 because the tapered portion of the ferrite core 121 of the inductor unit 120 has a shape different from that of the conventional ferrite core 131'. Thus, the ferrite core 121 may be disposed closer to an end of the stylus pen 102 in the housing 101. Thus, the receiver that receives the pen signal emitted from the stylus pen 100 according to an embodiment of the present disclosure may obtain a greater pen signal to improve sensing sensitivity of the stylus pen at a side of the receiver.

On the other hand, the receiver that is described above several times represents a module or device that receives the pen signal emitted from the stylus pen 100 according to an embodiment of the present disclosure. The receiver may be a general digitizer or a display panel. The display panel may have at least one loop pattern made of a conductive material. The loop pattern may be coupled to a touch sensor or coupled to the display panel separately from the touch sensor.

FIG. 9 is a perspective view according to a modified example of the ferrite core 121 in FIGS. 4 and 5, FIG. 10 is an enlarged front view illustrating a portion of a ferrite core 121' in FIG. 9, and a cross-sectional view taken along line A-A'.

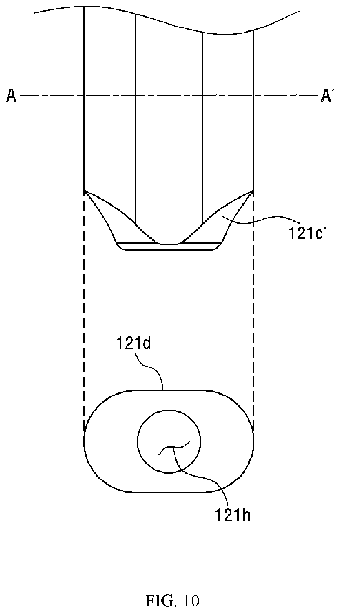

Referring to FIGS. 9 and 10, the ferrite core 121' has a cylindrical shape. A flat portion 121d may be disposed on at least a portion of an outer surface of the ferrite core 121'. Another flat portion corresponding to the flat portion 121d may be also disposed on another portion of the outer surface of the ferrite core 121'. The ferrite core 121' may be stably disposed in the housing by the flat portion 121d.

The ferrite core 121' has a cylindrical upper end 121a' and a cylindrical lower end 121b', and the lower end 121b' has at least two curved portions 121c'. The curved portion 121c' may extend from the outer surface of the lower end 121b' to a portion adjacent to the through-hole 121h of the ferrite core 121'. The curved portions 121c' may be disposed at both sides, which face each other, of the lower end 121b' based on the through-hole 121h, respectively.

While the curved portion 121c of the ferrite core 121 in FIGS. 4 to 5 may be disposed over the entire outer surface of the lower end 121b', the curved portion 121c' of the ferrite core 121' in FIGS. 9 to 10 may be disposed on a portion of the outer surface of the lower end 121b'.

The flat portions 121d may be disposed on the upper end 121a' and the lower end 121b', respectively, and connected and continuously arranged. Here, the flat portion 121d disposed on the lower end 121b' may be disposed between two curved portions 121c' that are disposed to face each other on the outer surface of the lower end 121b'.

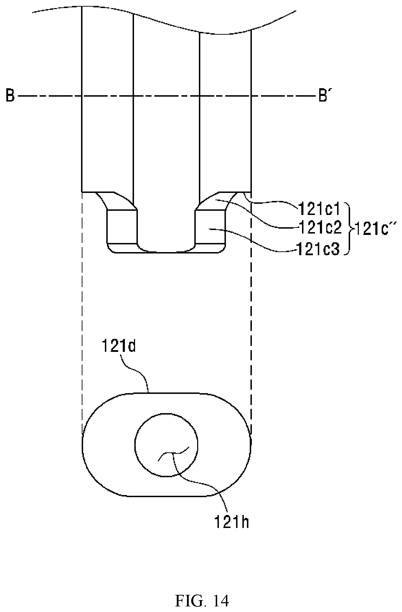

The ferrite core 121' in FIGS. 9 to 10 may be applied as a replacement to the stylus pen in FIGS. 9 to 26. In this case, a buffer member (not shown) may have a shape covering a portion of the lower end 121b' of the ferrite core 121'.

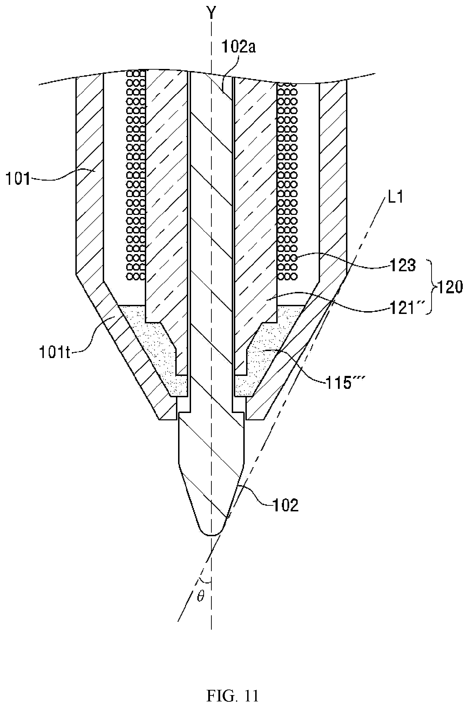

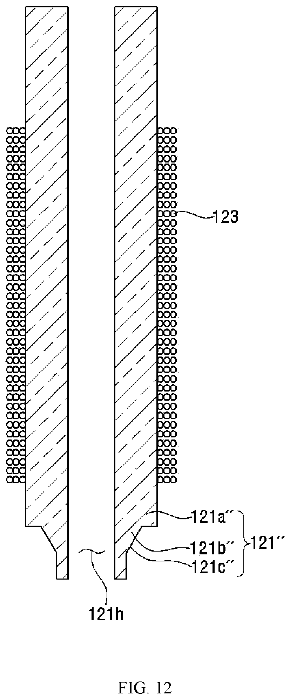

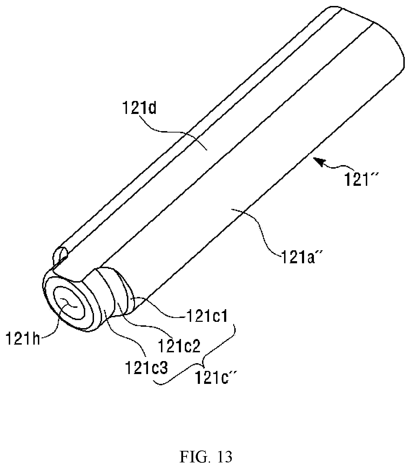

FIG. 11 is a cross-sectional view illustrating a stylus pen to which another modified example of the ferrite core 121 in FIG. 4 is applied, FIG. 12 is a cross-sectional view illustrating only a ferrite core 121" and a coil 123 in FIG. 11, FIG. 13 is a perspective view illustrating the ferrite core 121" in FIGS. 11 to 12, FIG. 14 is an enlarged front view illustrating a portion of the ferrite core 121" in FIG. 13, and a cross-sectional view taken along the line B-B'.

Referring to FIGS. 11 to 13, the ferrite core 121" in another modified example includes an upper end 121a" and a lower end 121b".

The lower end 121b" has a tapered shape, and an outer surface of the lower end 121b" includes at least one stepped portion 121c".

The stepped portion 121c" may be disposed over the entire outer surface of the lower end 121b" or disposed on a portion (portions) of the outer surface as in FIGS. 13 to 14.

The stepped portion 121c" may include a first surface 121c1, a second surface 121c2 connected to the first surface 121c1, and a third surface 121c3 connected to the second surface 121c2. The first surface 121c1 may be perpendicular to a direction in which a through-hole 121h passes, and the third surface 121c3 may be parallel to the direction in which the through-hole 121h passes. The second surface 121c2 may connect the first surface 121c1 and the third surface 121c3. Here, although not shown in the drawing, the second surface 121c2 may be a curved surface that is curved inward or outward.

The ferrite core 121" has a cylindrical shape. A flat portion 121d may be disposed on at least a portion of the outer surface of the ferrite core 121". A flat portion corresponding to the flat portion 121d may be disposed on another portion of the outer surface of the ferrite core 121". The flat portion 121d may allow the ferrite core 121" to be stably disposed in the housing.

The flat portions 121d may be disposed on the upper end 121a" and the lower end 121b", respectively, and connected and continuously arranged. Here, the flat portion 121d disposed on the lower end 121b" may be disposed between two stepped portions 121c" that are disposed to face each other on the outer surface of the lower end 121b".

Since the ferrite core 121" in FIGS. 11 to 14 includes the stepped portions 121c", the ferrite core 121" may have the same or similar effect as the ferrite core 121 in FIGS. 4 to 5.

The ferrite core 121" in FIGS. 11 to 14 may be applied as a replacement to the stylus pen in FIGS. 9 to 26. In this case, the buffer member (not shown) may have a shape covering a portion of the lower end 121b" of the ferrite core 121".

Hereinafter, detailed structures of stylus pens to which the ferrite cores 121, 121', and 121" according to various embodiments in FIGS. 4 to 14 are applied will be described with reference to the drawings.

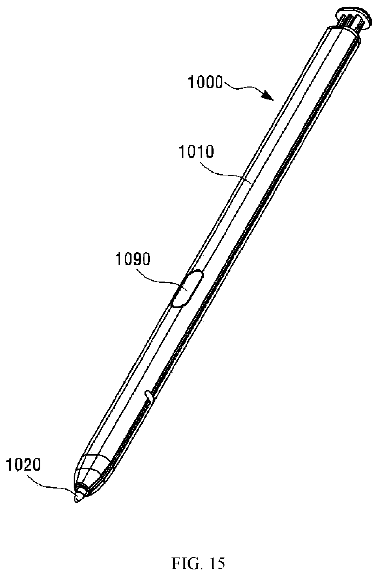

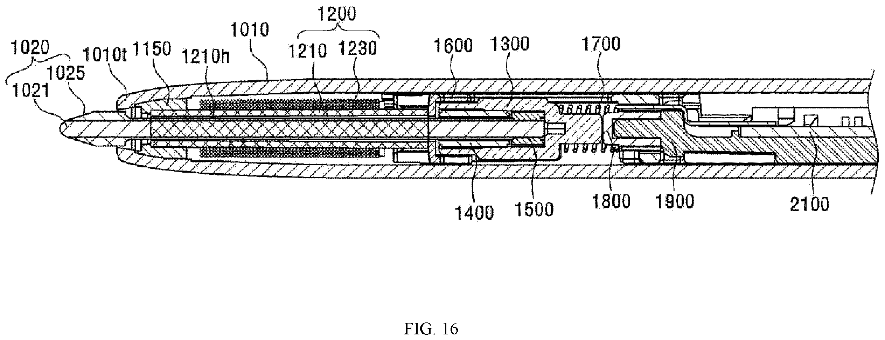

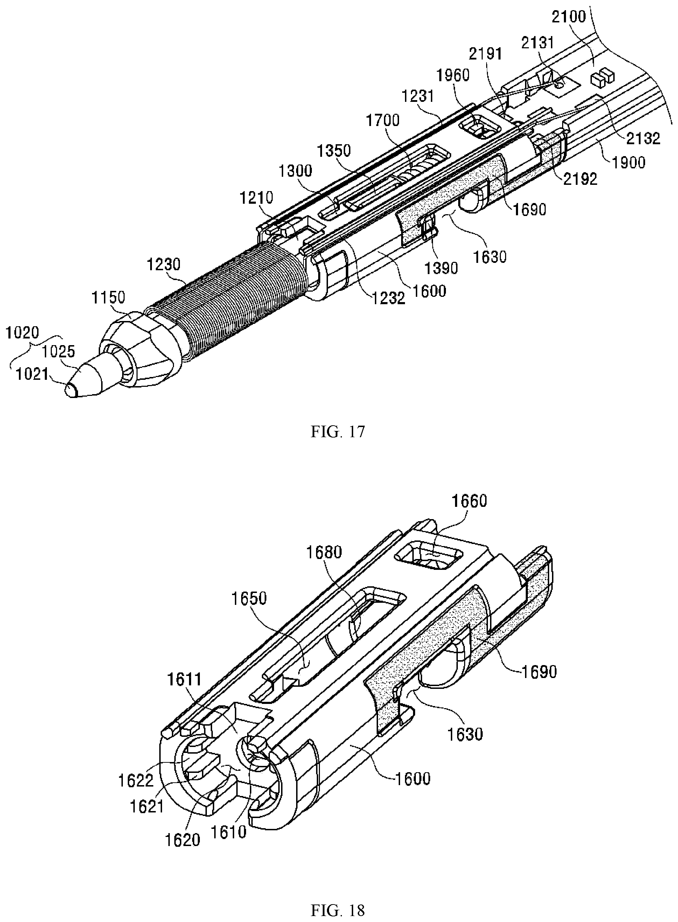

FIG. 15 is a perspective view illustrating a stylus pen 1000 according to another embodiment of the present disclosure, FIG. 16 is a cross-sectional view illustrating a portion of the stylus pen 1000 in FIG. 15, and FIG. 17 is a perspective view illustrating the stylus pen 1000 in FIG. 15, from which a housing 1010 is removed.

Referring to FIGS. 15 to 17, the housing 1010 forms an appearance of the stylus pen 1000. The housing 1010 includes an inner predetermined space and has an elongated shape in one direction. The housing 1010 may be formed such that two or more parts are coupled to each other or integrated into one piece.

The housing 1010 may be made of a non-conductive synthetic resin material.

A button unit 1090 may be disposed on the housing 1010. The button unit 1090 is designed to perform a specific operation of the stylus pen 1000. For example, the button unit 1090 may be a button for performing a cancel operation or a special function.

A core 1020 includes one end that is disposed outside the housing 1010, and the rest portion except the one end is disposed in the housing 1010. Here, the one end of the core 1020 may be referred to as a pen tip.

The core 1020 may be made of a non-conductive resin material.

The core 1020 may include a base part 1021 and an outer part 1025. The base part 1021 has an elongated shape extending along a longitudinal direction of the stylus pen 1000. The outer part 1025 surrounds a side surface of the base part 1021. One end of the base part 1021 is exposed to the outside instead of being covered by the outer part 1025. The outer part 1025 is made of a relatively harder material than that of the base part 1021 to reinforce and protect the base part 1021.

One portion of the one end of the core 1020 may be moved into the housing 1010 by external force applied from the outside. As the external force increases, a volume of the one portion of the one end of the core 1020, which is moved into the housing 1010, may increase. When the applied external force decreases, the one portion of the one end of the core 1020 is moved out of the housing 101 again. When the external force is not applied, the one portion of the one end of the core 1020 is returned to an original state.

A buffer member 1150 is disposed in the housing 1010 and disposed between one end of a ferrite core 1210 and an inner surface of the housing 1010. The buffer member 1150 may be disposed in a tapered portion 1010t of the housing 1010. Here, the tapered portion 1010t of the housing 1010, which is adjacent to the one end of the core 1020 among both ends of the housing 1010, has a shape having a width or diameter that gradually decreases in a direction toward an end of the one end of the housing 1010.

The buffer member 1150 has a cone shape or a polygonal pyramid shape and includes a through-hole through which one end of the ferrite core 1210 and a body between one end and the other end of the core 1020 pass. An inner surface of the through-hole may have a shape corresponding to an outer surface of the one end of the ferrite core 1210 and an outer surface of the body of the core 1020. Here, the body of the core 1020 refers to a portion, which is disposed in the through-hole of the ferrite core 1210, in the core 1020 having an elongated shape in one direction.

The buffer member 1150 may be made of an elastic material such as rubber to serve as a buffer between the ferrite core 1210 and the housing 1010. This buffer member 1150 may block an electrical or magnetic effect from the outside.

The buffer member 1150 has a shape that surrounds one end of the ferrite core 1210.

A virtual tangent line L1 that contacts, in common, the tapered portion 1010t of the housing 1010 and the portion (or pen tip) disposed outside the housing in the core 102 forms a predetermined angle as illustrated in FIG. 4. Here, the predetermined angle may be less than 30°. When the predetermined angle is less than 30°, a drawing may be performed in a state in which the stylus pen according to another embodiment of the present disclosure is inclined at 60° based on a contact surface.

The inductor unit 1200 may constitute an LC resonant unit with a capacitor unit (not shown). A resonance frequency may be set by a value of inductance L of the inductor unit 1200 and a value of capacitance C of the capacitor unit (not shown). The resonance frequency may be varied according to variation in the value of the inductance L of the inductor unit 1200 and/or the value of the capacitance C of the capacitor unit (not shown).

The inductor unit 1200 includes a ferrite core 1210 and a coil 1230 wound around an outer surface of the ferrite core 1210.

The ferrite core 1210 may have an overall cylindrical, elliptical, or polygonal barrel shape, and a through-hole 1210h that passes through the inside of the ferrite core 1210 may be formed along a longitudinal direction of the ferrite core 121.

The ferrite core 1210 may be replaced with one of the ferrite cores 121, 121', and 121" according to the various embodiments in FIGS. 4 to 14.

The ferrite core 1210 includes iron (Fe), manganese (Mn), and zinc (Zn).

The ferrite core 1210 includes 60 to 80 wt% of iron (Fe), 15 to 30 wt% of manganese (Mn), and 3 to 20 wt% of zinc (Zn). Here, the ferrite core 121 may include 70 wt% of iron (Fe), 18 wt% of manganese (Mn), and 12 wt% of zinc (Zn).

The ferrite core 1210 may include iron (Fe), manganese (Mn), and zinc (Zn), each of which has the above-described composition range at a firing temperature of 800°C to 1800°C.

As described in FIG. 2, there is an advantage in that the resonance frequency of the LC resonant unit is almost not varied due to the improved magnetization despite the magnetization caused by the external magnetic body by at least one of the material, the composition ratio, and the firing temperature of the ferrite core 1210.

The ferrite core 1210 has the through-hole 1210h through which the body of the core 1020 passes. The body of the core 1020 may perform a linear reciprocating movement along the longitudinal direction through the through-hole 1210h.

One end of the ferrite core 1210 may have a tapered shape having a diameter or width that gradually decreases in a direction toward an end thereof. Here, as illustrated in FIG. 5, an outer surface of the one end having the tapered shape may include at least one curved portion 121c that is curved inward.

As illustrated in FIG. 5, the ferrite core 1210 may include an upper end 121a and a lower end 121b disposed below the upper end 121a. Here, the upper end 121a and the lower end 121b may be integrated with each other.

The coil 1230 may be wound around the ferrite core 1210 with at least one layer.

The coil 1230 is electrically connected to a substrate 2100. The coil 1230 may include a first connection part 1231 and a second connection part 1232, which are for being connected to the substrate 2100. The first connection part 1231 is disposed on a fixing bracket 1600 and has one end that is electrically connected to a first terminal 2131 of the substrate 2100. The second connection part 1232 is disposed on the fixing bracket 1600 and has one end that is electrically connected to a second terminal 2132 of the substrate 2100. Here, the fixing bracket 1600 may have a groove in which each of the first connection part 1231 and the second connection part 1232 is disposed. The groove may be formed along the longitudinal direction of the stylus pen 1000 on an outer surface of the fixing bracket 1600. The groove may guide the first connection part 1231 and the second connection part 1232 of the coil 1230 and protect the first connection part 1231 and the second connection part 1232 from external impacts.

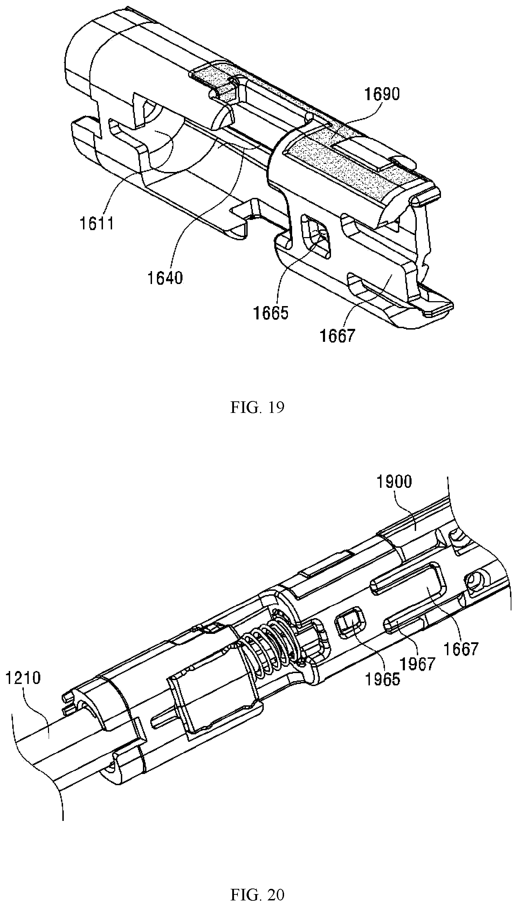

FIG. 18 is a perspective view illustrating only the fixing bracket 1600 in FIG. 17, FIG. 19 is a perspective view illustrating the fixing bracket 1600 in FIG. 18 viewed from another direction, and FIG. 20 is a perspective view illustrating a portion of FIG. 17 viewed from another direction.

Referring to FIGS. 17 to 20, the fixing bracket 1600 is fixed in the housing 1010. The fixing bracket 1600 may be disposed between the inductor unit 1200 and a substrate bracket 1900 in the housing 1010. The fixing bracket 1600 may have one end coupled to the inductor unit 1200 and the other end coupled to the substrate bracket 1900.

The one end of the fixing bracket 1600 may include an insertion groove 1620 into which the other end of the ferrite core 1210 of the inductor unit 1200 is inserted. The insertion groove 1620 may be defined by a first partition wall 1611 and an inner wall 1622 of the fixing bracket 1600.

The first partition wall 1611 may contact the other end of the ferrite core 1210, and the first partition wall 1611 has a through-hole 1610 through which the core 1020 passes.

The inner wall 1622 may include a plurality of protrusions 1621 that protrude into the insertion groove 1620. The plurality of protrusions 1621 may contact an outer surface of the other end of the ferrite core 1210 to hold a position thereof.

The other end of the fixing bracket 1600 may include latch holes 1660 and 1665 into which latch parts 1960 and 1965 of the substrate bracket 1900 are inserted. At least one latch hole 1660 and 1665 may be provided. Alternatively, as illustrated in the drawing, one latch hole may be disposed above the fixing bracket 1600, and one latch hole may be disposed below the fixing bracket 1600. As the latch part 1960 of the substrate bracket 1900 is coupled to the latch hole 1660, the fixing bracket 1600 may be coupled to the substrate bracket 1900.

The other end of the fixing bracket 1600 may include a guide protrusion 1667. The guide protrusion 1667 may extend along a longitudinal direction of the fixing bracket 1600. The guide protrusion 1667 may be coupled with a guide part 1967 of the substrate bracket 1900. As the guide protrusion 1667 is coupled to the guide part 1967 of the substrate bracket 1900, the fixing bracket 1600 may be arranged along the longitudinal direction of the stylus pen 1000.

The other end of the fixing bracket 1600 may include a second partition wall 1680. The second partition wall 1680 fixes a position of an elastic member 1800 together with the substrate bracket 1900. That is, the elastic member 1800 may be fixedly mounted between the second partition wall 1680 and the substrate bracket 1900.

The fixing bracket 1600 is disposed to surround a moving bracket 1300, an elastic body 1700, and the elastic member 1800. The fixing bracket 1600 may have an inner accommodation space 1640 in which the moving bracket 1300, the elastic body 1700, and the elastic member 1800 are accommodated. The moving bracket 1300 may perform a linear reciprocating movement in the accommodation space 1640 of the fixing bracket 1600,

The fixing bracket 1600 may include two or more electrode patterns 1690. At least two electrode patterns 1690 may be disposed on an outer surface of the fixing bracket 1600. For example, the electrode patterns 1690 may be disposed on both outer surfaces of the fixing bracket 1600, respectively. The electrode patterns 1690 may be plated on the outer surface of the fixing bracket 1600 made of a non-conductive material. For example, the electrode patterns 1690 may be formed on the outer surface of the non-conductive fixing bracket by using a laser direct structuring (LDS) and a laser manufacturing antenna (LMA).

Grooves (or cavities) corresponding to shapes of the electrode patterns 1690 may be formed on the outer surface of the fixing bracket 1600. The electrode patterns 1690 may be plated in the grooves (or cavities). Although not shown in the drawing, according to another embodiment, protrusions corresponding to the shapes of the electrode patterns 1690 may be formed on the outer surface of the fixing bracket 1600, and the electrode patterns 1690 may be plated on the protrusions.

The electrode patterns 1690 may be arranged around a guide groove 1630 of the fixing bracket 1600 and have an uneven shape or a ' 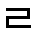 '-shape. Each of the electrode patterns 1690 may have one end that is in contact with or spaced a predetermined distance from an electrode pattern 1390 of the moving bracket 1300 and the other end that is electrically connected to terminals 2191 and 2192 of the substrate 2100.

According to a movement of the moving bracket 1300 synchronized with a movement of the core 1020, the electrode pattern 1690 may be in contact with or spaced at a predetermined distance from the electrode pattern 1390 of the moving bracket 1300. This will be explained later with reference to another drawing.

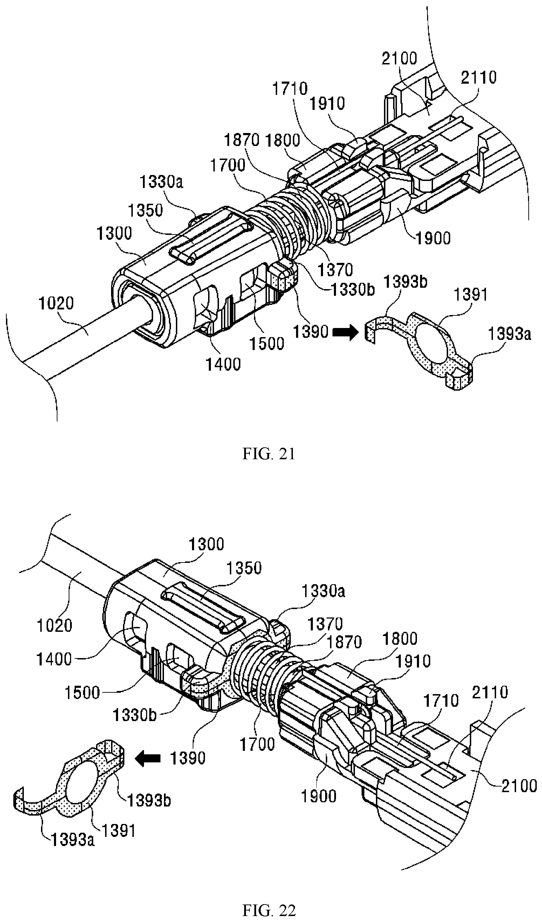

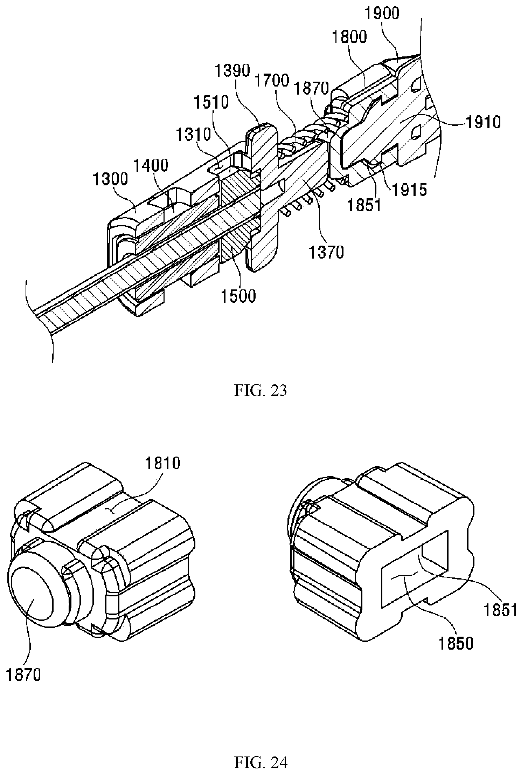

FIG. 21 is a perspective view from which the inductor unit 1200 and the fixing bracket 1600 in FIG. 17 are removed, FIG. 22 is a perspective view of FIG. 21 viewed from another direction, and FIG. 23 is a cross-sectional view of FIG. 21.

Referring to FIGS. 16 to 21, the moving bracket 1300 is moved in synchronization with the core 1020. When one end of the core 1020 receives external force from the outside, the core 1020 is moved into the housing 1010, and the moving bracket 1300 is moved together with the core 1020.

The moving bracket 1300 accommodates the other end of the core 1020, the magnetic body 1400, and the protection member 1500. The moving bracket 1300 may include an accommodation part for accommodating the other end of the core 1020, the magnetic body 1400, and the protection member 1500.

In the accommodation part, the magnetic body 1400 and the protection member 1500 are disposed to surround the other end of the core 1020. To this end, the magnetic body 1400 may have a barrel shape with a through-hole through which the other end of the core 1020 passes, and the protection member 1500 may have a barrel shape with a through-hole through which the other end of the core 1020 passes.

The magnetic body 1400 includes a magnetic material and is moved together with the core 1020 in synchronization with the movement of the core 1020. The movement of the magnetic body 1400 changes a distance to the inductor unit 1200 fixed in the housing 1010. An inductance of the inductor unit 1200 is varied by the change in distance.

The protection member 1500 may include an elastic material and be inserted between the other end of the core 1020 and the moving bracket 1300. The protection member 1500 may protect the other end of the core 1020. Since the protection member 1500 is inserted between the other end of the core 1020 and the moving bracket 1300, the moving bracket 1300 may be synchronized with the movement of the core 1020.

As illustrated in FIG. 20, the protection member 1500 may include a protrusion 1510 that protrudes from an outer surface thereof to the outside. The protrusion 1510 may be inserted into an insertion groove 1310 defined in the moving bracket 1300. The protection member 1500 may be stably fixed to the moving bracket 1300 by the protrusion 1510 of the protection member 1500 and the insertion groove 1310 of the moving bracket 1300, and thus the other end of the core 1020 may be fixed to the moving bracket 1300.

The moving bracket 1300 may include a first protrusion 1330a and a second protrusion 1330b. The first protrusion 1330a and the second protrusion 1330b may protrude in an outward direction from the outer surface of the moving bracket 1300 or in a direction perpendicular to a longitudinal direction of the stylus pen 1000. The first protrusion 1330a and the second protrusion 1330b may be disposed in the guide hole 1630 of the fixing bracket 1600 in FIG. 17. When the moving bracket 1300 is moved in synchronization with the movement of the core 1020, the first protrusion 1330a and the second protrusion 1330b may be moved along the guide hole 1630 of the fixing bracket 1600.

The moving bracket 1300 may include a third protrusion 1350. The third protrusion part 1350 may protrude in an outward direction from the outer surface of the moving bracket 1300 or in a direction perpendicular to the longitudinal direction of the stylus pen 1000. The third protrusion 1350 may be disposed in the guide hole 1650 of the fixing bracket 1600 in FIG. 17. When the moving bracket 1300 is moved in synchronization with the movement of the core 1020, the third protrusion 1350 may be moved along the guide hole 1650 of the fixing bracket 1600.

The moving bracket 1300 may include an extension part 1370. The extension part 1370 may extend along the longitudinal direction of the stylus pen 1000 from the outer surface of the moving bracket 1300. Alternatively, the extension part 1370 may extend along the longitudinal direction of the core 1020 from the outer surface of the moving bracket 1300. The extension part 1370 may have a structure and a shape to be disposed in the elastic member 1700. An extension part 1870 of the elastic member 1800 may be disposed on an end of the extension part 1370.

The moving bracket 1300 may include an electrode pattern 1390. The electrode pattern 1390 may be disposed on the outer surface of the moving bracket 1300, on which the extension part 1370 is formed, among the outer surfaces of the moving bracket and on the first and second protrusions 1330a and 1330b.

The electrode pattern 1390 may be in contact with and electrically connected to the elastic body 1700 surrounding the extension part 1370 of the moving bracket 1300. The electrode pattern 1390 may be in contact with and electrically connected to the electrode pattern 1690 of the fixing bracket 1600 in FIG. 17, and detached and electrically disconnected from the electrode pattern 1690 of the fixing bracket 1600 by the movement of the core 1020.

The electrode pattern 1390 may be plated on the outer surface of the moving bracket 1300 made of non-conductive material. For example, the electrode pattern 1390 may be formed on the outer surface of the moving bracket 1300 by using a laser direct structuring (LDS) and a laser manufacturing antenna (LMA).

The electrode pattern 1390 may include a base electrode pattern 1391 and first and second extension patterns 1393a and 1393b.

The base electrode pattern 1391 may be disposed on the outer surface of the moving bracket 1300 and arranged to surround the extension part 1370 of the moving bracket 1300. The base electrode pattern 1391 contacts one end of the elastic member 1700.

The first and second extension patterns 1393a and 1393b may extend respectively from both sides of the first electrode pattern 1391, the first extension pattern 1393a may be disposed on the first protrusion 1330a, and the second extension pattern 1393b may be disposed on the second protrusion 1330b. The first and second extension patterns 1393a and 1393b may contact the electrode pattern 1690 of the fixing bracket 1600 in FIG. 17 or may be separated therefrom by a movement of the core 1020.

The elastic body 1700 may be made of a conductive material and have a spring shape. The elastic body 1700 may be disposed between the moving bracket 1300 and the elastic member 1800. Here, the elastic body 1700 may be inserted between the moving bracket 1300 and the elastic member 1800 in a partially pressed state instead of being completely pressed. When the external force applied to the moving bracket 1300 synchronized with the movement of the core 1020 is less than elastic force of pushing outward from the partially pressed elastic body 1700, the elastic member 1700 is not pressed. When the external force is greater than the elastic force, the elastic body 1700 is initiated to be pressed.

In the elastic body 1700, the extension part 1370 of the moving bracket 1300 and the extension part 1870 of the elastic member 1800 may be disposed together. Through this, there is an advantage in that an inner volume of the stylus pen 1000 may be reduced because an inner space of the elastic body 1700 is usable.

The elastic body 1700 has one end electrically connected to the electrode pattern 1390 of the moving bracket 1300 and the other end electrically connected to the terminal 2110 of the substrate 2100. The elastic body 1700 may include a connecting wire 1710 that connects the elastic body 1700 and the terminal 2110 of the substrate 2100. The connecting wire 1710 may have one end connected to the elastic body 1700 and the other end connected to the terminal 2110 of the substrate 2100. Each of the elastic member 1800 and the substrate bracket 1900 may have a guide groove in which the connecting wire 1710 is disposed in order to protect and guide the connecting wire 1710.

The elastic member 1800 is made of a non-conductive material and has a predetermined elasticity. For example, the elastic member 1800 may be made of rubber.

The elastic member 1800 may be disposed between the moving bracket 1300 and the substrate bracket 1900.

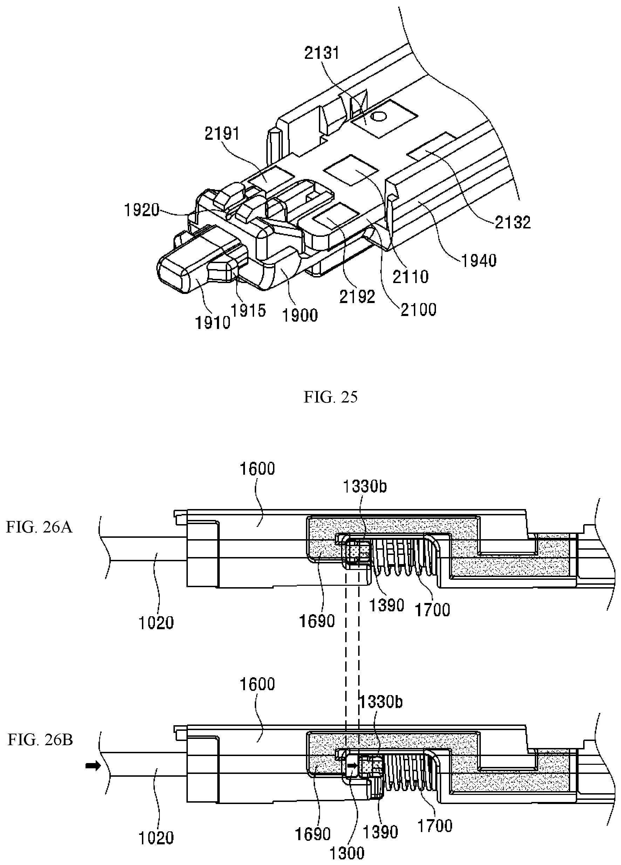

FIG. 24 is perspective views illustrating only the elastic member 1800 in FIG. 21, and FIG. 25 is a perspective view illustrating the substrate bracket 1900 and the substrate 2100 in FIG. 21.

Referring to FIGS. 18 to 25, the elastic member 1800 may include an extension part 1870. The extension part 1870 may extend in a direction from an outer surface of the elastic member 1800 to the moving bracket 1300. The extension part 1870 may be disposed in the elastic body 1700.

The elastic member 1800 may include a guide groove 1810. The guide groove 1810 may be formed along the longitudinal direction of the stylus pen 1000 on the outer surface of the elastic member 1800. A connecting wire 1710 of the elastic body 1700 may be disposed in the guide groove 1810.

The elastic member 1800 may include a mounting groove 1850. The mounting groove 1850 is defined in the outer surface of the elastic member 1800. The mounting groove 1850 may be disposed at a side opposed to the extension part 1870. A mounting part 1910 of the substrate bracket 1900 may be inserted into the mounting groove 1850. A latch groove 1851 having a shape corresponding to a protrusion 1915 of the mounting part 1910 of the substrate bracket 1900 may be formed in the mounting groove 1850. Through this, the elastic member 1800 may be stably fixed and mounted to the substrate bracket 1900.

The substrate bracket 1900 supports the substrate 2100 in the housing 1010 and is coupled with the elastic member 1800 to support the elastic member 1800.

The substrate bracket 1900 may include a side part 1940 that guides and supports a side portion of the substrate 2100.

The substrate bracket 1900 may include a mounting part 1910 for being coupled with the elastic member 1800. The mounting part 1910 protrudes in a direction from the substrate bracket 1900 to the moving bracket 1300. The mounting part 1910 may include a protrusion 1915 that protrudes from an outer surface thereof. The protrusion 1915 may protrude in a direction perpendicular to a direction in which the mounting part 1910 protrudes.

The substrate bracket 1900 may include a guide groove 1920. The guide groove 1920 may guide and protect the connecting wire 1710 of the elastic member 1700.

The substrate 2100 is disposed on the substrate bracket 1900.

The substrate 2100 may include a plurality of terminals 2110, 2131, 2132, 2191, and 2192. Among the plurality of terminals 2110, 2131, 2132, the terminal 2110 is electrically connected to the elastic body 1700, and first and second terminals 2131 and 2132 are electrically connected to the coil 1230 of the inductor unit 1200. Third and fourth terminals 2191 and 2192 are electrically connected to electrode patterns 1690 disposed on both outer surfaces of the fixed bracket 1600, respectively.

The substrate 2100 includes a capacitor unit (not shown). One or more capacitors that constitute the capacitor unit (not shown) may be arranged on the substrate 2100.

The substrate 2100 may include a circuit pattern that electrically connects the one or more capacitors of the capacitor unit (not shown) and the plurality of terminals 2110, 2131, and 2132.

FIGS. 26A and 26B are a view for explaining a movement of a moving bracket 1300 according to a movement of a core body 1020 in FIGS. 17 to 25, and an electrical contact and disconnection between the fixing bracket 1600 and the moving bracket 1300.

FIG. 26A illustrates a case when any external force is not applied to the core 1020, and FIG. 26B illustrates a case when predetermined external force is applied to the core 1020 to move the moving bracket 1300 in one direction.

First, referring to FIG. 26A, when any external force is not applied to the core 1020, the electrode pattern 1390 of the moving bracket 1300 contacts the electrode pattern 1690 of the fixing bracket 1600. That is, the electrode pattern 1390 of the moving bracket 1300 and the electrode pattern 1690 of the fixing bracket 1600 are electrically connected to each other.

As the second protrusion 1330b of the moving bracket 1300 is pushed toward the core 1020 by the elastic body 1700, a state in which the electrode pattern 1390 disposed on an outer surface of the second protrusion 1330b is in contact with the electrode pattern 1690 of the fixing bracket 1600 may be maintained.

Referring to FIG. 26B, when predetermined force is applied to the core 1020 to move the core 1020 in one direction, the moving bracket 1300 is moved together with the core 1020 in the one direction. As the moving bracket 1300 is moved in the one direction, the second protrusion 1330b is also moved in the one direction. As the second protrusion 1330b is moved, a contact between the electrode pattern 1390 of the moving bracket 1300 and the electrode pattern 1690 of the fixing bracket 1600 is released. Likewise, as the first protrusion 1330a disposed at a side opposed to the second protrusion 1330b is also moved, the contact between the electrode pattern 1390 of the moving bracket 1300 and the electrode pattern 1690 of the fixing bracket 1600 is released. Also, as the moving bracket 1300 is moved, the elastic body 1700 is pressed.

As illustrated in FIG. 26B, when predetermined force is applied to the core 1020 to move the core 1020 in one direction, a contact between the electrode pattern 1390 of the moving bracket 1300 and the electrode pattern 1690 of the fixing bracket 1600 is released. The release of the contact causes a change in capacitance of the capacitor unit (not shown) mounted to the substrate 2100. The change of the capacitance changes a frequency of a pen signal emitted from the stylus pen 1000. A receiving side that receives the pen signal may detect the changed frequency to determine whether the stylus pen 1000 is brought into contact with a screen.

As the moving bracket 1300 is moved, the magnetic body 1400 disposed in the moving bracket 1300 is also moved. As the magnet 1400 is moved, a distance between the inductor unit 1200 and the magnetic body 1400 increases. The change in distance between the inductor unit 1200 and the magnetic body 1400 changes an inductance of the inductor unit (not shown). The change in inductance occurs together with the above-described change in capacitance. Here, the stylus pen may be configured such that the change of the capacitance is more dominantly changed than the change of the inductance. In a limited inner space of the housing of the stylus pen, it is easier to dramatically change the capacitance rather than the inductance. Alternatively, depending on cases, the stylus pen may be configured such that the change of the inductance is more dominantly changed than the change of the capacitance. Alternatively, the stylus pen may be configured such that the change of the capacitance is similar in phase to the change of the inductance. In any of the above-described three cases, the capacitance and the inductance are changed by the movement of the moving bracket 1300, and the changes of the capacitance and the inductance cause a change of the resonance frequency of the resonant circuit formed by the inductor unit 1200 and the capacitor unit. The receiving side that receives the pen signal may detect the change of the resonance frequency to determine whether the stylus pen 1000 is in contact with the screen.

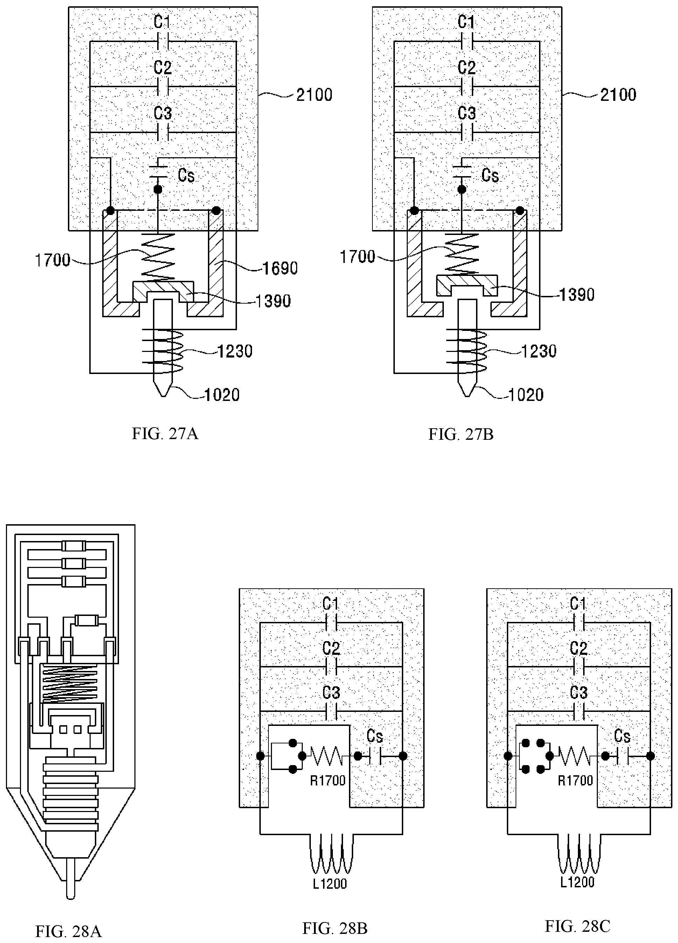

FIGS. 27A and 27B are a schematic view illustrating each of FIGS. 26A and 26B, and FIGS. 28A to 28C are a view simplifying a stylus pen according to another embodiment of the present disclosure and showing equivalent circuit diagrams of FIGS. 26A and 26B.

Referring to FIGS. 27A and 27B and FIGS. 28A to 28C, a plurality of capacitors C1, C2, C3, and Cs are arranged on the substrate 2100. The capacitors C1, C2, C3, and Cs may form a capacitor unit (not shown). At least one or more capacitors C1, C2, and C3 of the plurality of capacitors C1, C2, C3, and Cs are connected in parallel to maintain a constant capacitance value, and an auxiliary capacitor Cs is connected in parallel to the basic capacitor according to the contact or release between the electrode pattern 1690 of the fixing bracket 1600 and the electrode pattern 1390 of the moving bracket 1300 as illustrated in FIGS. 26A and 26B.

First, as illustrated in FIG. 27A and FIG. 28B, since the electrode pattern 1690 of the fixing bracket 1600 and the electrode pattern 1390 of the moving bracket 1300 are in contact with each other in a state in which external force is not applied to the core 1020, an auxiliary capacitor Cs is connected in parallel with the basic capacitors C1, C2, and C3. Thus, a capacitance of the capacitor unit (not shown) is a sum of capacitance values of the basic capacitors C1, C2, and C3 and the auxiliary capacitor Cs.

Thereafter, as illustrated in FIG. 27B and FIG. 28C, when predetermined external force is applied to the core 1020, the electrode pattern 1390 of the moving bracket 1300 is released from the electrode pattern 1690 of the fixing bracket 1600 by the movement of the moving bracket 1300 synchronized with the movement of the core 1020. Thus, the auxiliary capacitor Cs is not electrically connected to the basic capacitors C1, C2, and C3, and the capacitance of the capacitor unit (not shown) is changed to a capacitance value of the basic capacitors C1, C2, and C3.

In particular, referring to FIG. 28C, it may be known that the electrode pattern 1390 of the moving bracket 1300 is in contact with the electrode pattern 1690 of the fixing bracket 1600 at two points. As illustrated in FIGS. 21 and 22, it may be understood that the fixing bracket 1600 has two electrode patterns 1690, and the first and second extension patterns 1393a and 1393b are arranged on the first and second protrusions 1330a and 1330b of the moving bracket 1300.

When the external force applied to the core 1020 is insufficient to separate both the first and second extension patterns 1393a and 1393b from two electrode patterns 1690 of the fixing bracket 1600, i.e., when the first extension pattern 1393a is separated from one electrode pattern 1690 of the fixing bracket 1600 while the second extension pattern 1393b is not separated from the other electrode pattern 1690 of the fixing bracket 1600, the auxiliary capacitor Cs remains connected in parallel with the basic capacitors C1, C2, and C3.

On the other hand, only when the external force applied to the core 1020 is sufficient to completely separate both the first and second extension patterns 1393a and 1393b from the two electrode patterns 1690 of the fixing bracket 1600, the auxiliary capacitor Cs is electrically disconnected from the basic capacitors C1, C2, and C3. Thus, when the stylus pen 1000 according to another embodiment of the present disclosure is used, there is an advantage in that a clear distinguishment between the hover state and the contact state may be obtained by clearly setting a reference pressure for distinguishing the hover state and the contact state. In particular, since the stylus pen 1000 according to another embodiment of the present disclosure may still maintain the contact state between another extension pattern and another electrode pattern although one extension pattern of the first and second extension patterns 1393a and 1393b is not in contact with one of the two electrode patterns 1690 of the fixing bracket 1600 due to a limitation in manufacturing process while manufacturing the stylus pen or carelessness of a user while using the stylus pen.

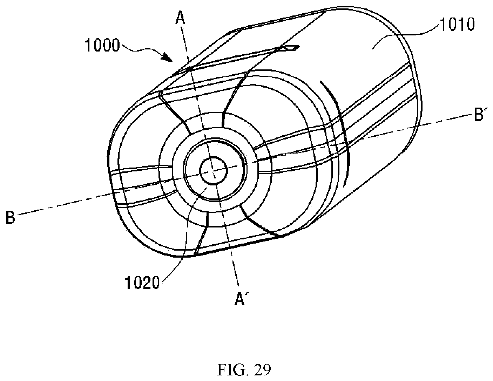

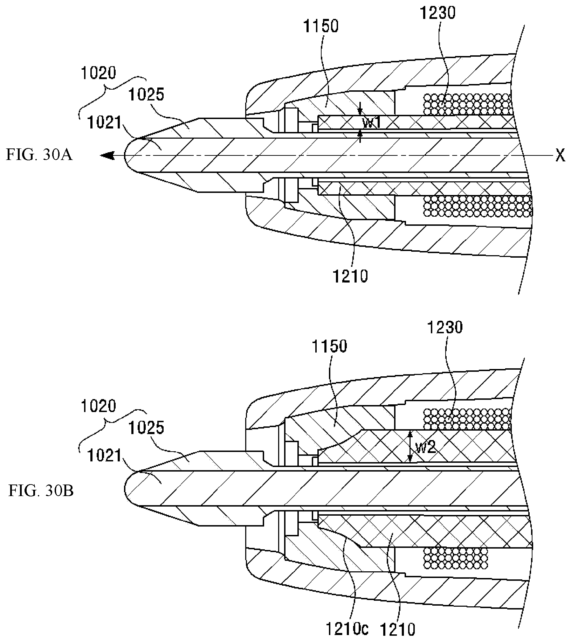

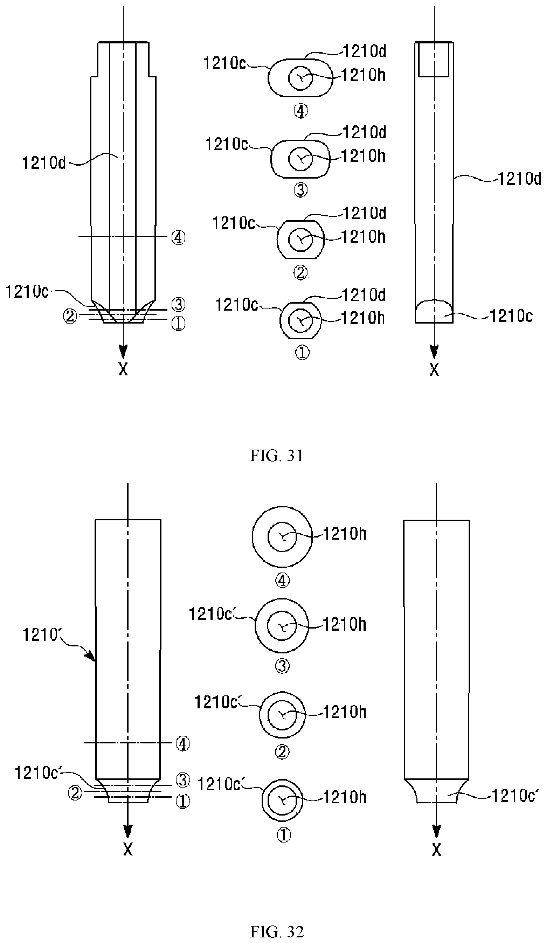

FIG. 29 is a perspective view illustrating the stylus pen 1000 in FIG. 15 according to another embodiment of the present disclosure viewed from the core 1020, FIG. 30A is a partial cross-sectional view taken along line A-A' of the stylus pen 1000 in FIG. 29, FIG. 30B is a partial cross-sectional view taken along line B-B' of the stylus pen 1000 in FIG. 29, and FIG. 31 is a view illustrating cross-sectional views and side views of the ferrite core 1210 in FIGS. 29 to 30B.

Referring to FIGS. 17 and 29 to 31, the housing 1010 of the stylus pen 1000 has a rectangular container shape having rounded corners, and an exposed portion of the core 1020 in the housing 1010 has a width that gradually decreases in an outward direction.

Components disposed in the housing 1010 have shapes corresponding to the shape of the housing 1010 according to an outer shape of the housing 1010. Among the inner components, the ferrite core 1210 of the inductor unit 1200 also has an optimized structure corresponding to the outer shape of the housing 1010.

As illustrated in FIGS. 30A and 30B, in the ferrite core 1210, a first cross-sectional shape taken along a first vertical direction (A-A' direction in FIG. 29) perpendicular to an axial direction X (or the longitudinal direction of the stylus pen 1000) of the ferrite core 1210 is different from a second cross-section shape taken along a second vertical direction (B-B' direction in FIG. 29). Specifically, a thickness w1 of the ferrite core 1210 in the first vertical direction is different from a thickness w2 in the second vertical direction. More specifically, the thickness w1 in the first vertical direction is less than the thickness w2 in the second vertical direction. Here, the thickness w1 in the first vertical direction is defined as a minimum distance from the through-hole 1210h of the ferrite core 1210 to the outer surface of the ferrite core 1210 in the first cross-sectional shape, and the thickness w2 in the second vertical direction is defined as a minimum distance from the through-hole 1210h of the ferrite core 1210 to the outer surface of the ferrite core 1210 in the second cross-sectional shape. Alternatively, unlike as illustrated in the drawing, the thickness w1 in the first vertical direction may be a total thickness of the ferrite core 1210 in the first cross-sectional shape, and the thickness w2 in the second vertical direction may be a total thickness of the ferrite core 1210 in the second cross-sectional shape.

The ferrite core 1210 has a container or cylinder shape. A flat portion 1210d may be disposed on at least a portion of the outer surface of the ferrite core 1210. A flat portion corresponding to the flat portion 1210d may be disposed on another portion of the outer surface of the ferrite core 1210. The ferrite core 1210 may be stably disposed in the housing 1010 by the flat portion 1210d. The flat portion 1210d extends from one end to the other end of the ferrite core 1210 along the axial direction X of the ferrite core 1210.

One end of the ferrite core 1210 may include at least two curved portions 1210c. As illustrated in FIGS. 30A and 30B, at least a portion of the curved portion 1210c may be shown in the second cross-sectional shape, but may not be shown in the first cross-sectional shape. The curved portion 1210c may be curved from one side surface of one end of the ferrite core 1210 to a portion adjacent to the through-hole 1210h of the ferrite core 1210 in a direction toward the through-hole 1210h. The curved portion 1210c may be disposed on each of both sides opposed to each other at one end of the ferrite core 1210 based on the through-hole 1210h.

As illustrated in ①, ②, and ③ of FIG. 31, the curved portion 1210c is changed in shape from an aspherical shape to a spherical shape along the axial direction X of the ferrite core 1210. ③ of FIG. 31 shows the curved portion 1210c having an aspherical shape, and ① of FIG. 31 shows the curved portion 1210c having a spherical shape. Also, ② of FIG. 31 shows the curved portion 1210c having an intermediate shape between the aspherical shape and the spherical shape.

At one end of the ferrite core 1210, the flat portion 1210d has a shape having a width that gradually decreases along the axial direction X of the ferrite core 1210. Here, the width of the flat portion 1210d may decrease non-linearly.

As described in FIGS. 6 to 8, when the above-described ferrite core 1210 is used, the inductor unit 1200 including the ferrite core 1210 may be disposed closer to a tip of the stylus pen 1000 in the stylus pen 1000. Thus, since the inductor unit 1200 may be moved relatively closer to the receiver (not shown), the pen signal received by the receiver may increase.

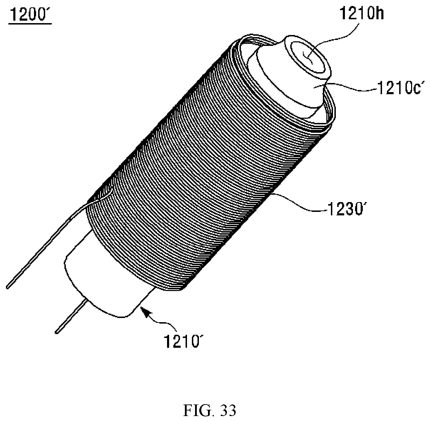

FIG. 32 is a view for explaining a modified example of the ferrite core 1210 in FIG. 31, and FIG. 33 is a perspective view illustrating an inductor unit 1200' in which a coil 1230' is wound around an outer surface of the ferrite core 1210' in FIG. 32.

Referring to FIG. 32, the ferrite core 1210' has a cylindrical shape.

One end of the ferrite core 1210' may include a curved portion 1210c'. The curved portion 1210c' may be a curved surface extending from one end of the ferrite core 1210' to a portion adjacent to the through-hole 1210h of the ferrite core 1210' in a direction toward the through-hole 1210h.

The ferrite core 1210' has a through-hole 1210h along the axial direction X. The through-hole 1210h may have a constant diameter from one end to the other thereof.

As illustrated in ①, ②, and ③ of FIG. 32, the curved portion 1210c' has an outer diameter that gradually decreases in the axial direction X of the ferrite core 1210' and a constant inner diameter. Here, the inner diameter defines the through-hole 1210h. Alternatively, as illustrated in ①, ②, and ③ of FIG. 32, a thickness between the outer diameter and the inner diameter of the curved portion 1210c' gradually decreases in the axial direction X of the ferrite core 1210'.

A rate of decrease in the outer diameter or the thickness (between the outer diameter and the inner diameter) along the axial direction X of the ferrite core 1210' may be non-linear. More specifically, when dividing one end of the ferrite core 1210' into an upper portion (on which ③) is disposed), an intermediate portion (on which ② is disposed), and a lower portion (on which ① is disposed), the rate of decrease in the outer diameter or thickness from the upper portion to the intermediate portion may be relatively greater than that from the intermediate portion to the lower portion. That is, the rate of decrease from the upper portion to the intermediate portion may be relatively sharp, and the rate of decrease from the intermediate portion to the lower portion may be relatively mild.

Referring to FIG. 33, the coil 1230' may be wound around the outer surface (or outer circumference) of the ferrite core 1210'.

The inductor unit 1200' including the ferrite core 1210' and the coil 1230' may be disposed in a cylindrical housing (not shown) instead of the housing 1000 in FIG. 29. Although not shown in the drawing, the ferrite core of the inductor unit may have a shape corresponding to the inner shape of the housing.

The ferrite core and the stylus pen including the same according to the embodiment of the present disclosure may be used to improve the effect of the magnetization caused by the external magnetic body. Furthermore, the change in the resonance frequency of the resonant circuit unit may be minimized to prevent the degradation in performance of the input system.

## Claims

1. A ferrite core mounted in a stylus pen, the ferrite core comprising 60 to 80 wt% of iron (Fe), 15 to 30 wt% of manganese (Mn), and 3 to 20 wt% of zinc (Zn).

2. The ferrite core of claim 1, wherein the ferrite core is manufactured at a firing temperature of 800°C to 1800°C.

3. The ferrite core of claim 1 or 2, wherein the ferrite core has a through-hole formed along a longitudinal direction of the stylus pen,
the ferrite core has a first cross-sectional shape in a first vertical direction perpendicular to the longitudinal direction and a second cross-section shape in a second vertical direction perpendicular to the first vertical direction,
the first cross-sectional shape is different from the second cross-sectional shape,
the ferrite core comprises a curved portion disposed at one end of the ferrite core, and
the curved portion comprises at least two curved surfaces that are curved from one side surface of one end of the ferrite core to a portion adjacent to the through-hole of the ferrite core in a direction toward the through-hole.

4. The ferrite core of claim 3, wherein a thickness of the ferrite core in the first vertical direction in the first cross-sectional shape is less than that of the ferrite core in the second vertical direction in the second cross-sectional shape, and
at least a portion of the curved portion is shown only in the second cross-sectional shape.

5. The ferrite core of claim 3 or 4, wherein the curved portion is gradually changed from an aspherical shape to a spherical shape in a direction from the other end to the one end of the ferrite core.

6. The ferrite core of any one of claims 3 to 5, further comprising a flat portion disposed on one portion of the outer surface of the ferrite core and formed between both ends of the ferrite core along the longitudinal direction,
wherein at one end of the ferrite core, the flat portion has a width that gradually decreases in a direction toward the one end of the ferrite core.

7. A stylus pen comprising:
a housing;
a core body having one end disposed outside the housing and the rest disposed in the housing and moved along a longitudinal direction by external force applied to the one end;
an inductor unit comprising a ferrite core disposed in the housing and having a through-hole through which the core body passes and a coil wound around an outer surface of the ferrite core;
a fixing bracket fixed in the housing and coupled to the other end of the ferrite core; and
a moving bracket disposed in the fixing bracket, surrounding the other end of the core body, and connected with the core body to be synchronized with a movement of the core body,
wherein the ferrite core comprises 60 to 80 wt% of iron (Fe), 15 to 30 wt% of manganese (Mn), and 3 to 20 wt% of zinc (Zn).

8. The stylus pen of claim 7, wherein the ferrite core has a first cross-sectional shape in a first vertical direction perpendicular to the longitudinal direction and a second cross-section shape in a second vertical direction perpendicular to the first vertical direction,
the first cross-sectional shape is different from the second cross-sectional shape,
the ferrite core comprises a curved portion disposed at one end of the ferrite core, and
the curved portion comprises at least two curved surfaces that are curved from one side surface of one end of the ferrite core to a portion adjacent to the through-hole of the ferrite core in a direction toward the through-hole.

9. The stylus pen of claim 8, further comprising:
a magnetic body disposed in the moving bracket, surrounding the other end of the core body, and connected with the moving bracket; and
a protection member disposed in the moving bracket, surrounding the other end of the core body together with the magnetic body, and disposed between the core body and the movable bracket to press the core body.

10. The stylus pen of any one of claims 7 to 9, further comprising:
a substrate bracket fixed in the housing and coupled to the other end of the fixing bracket; and
a substrate on which a capacitor unit that forms a resonant circuit with the inductor unit and which is mounted to the substrate bracket.

11. The stylus pen of claim 10, further comprising:
an elastic member disposed in the fixing bracket and mounted to the substrate bracket; and
an elastic body disposed in the fixing bracket and disposed between the moving bracket and the elastic member,
wherein the elastic body has an inner empty space, and
at least a portion of the moving bracket and at least a portion of the elastic member are in contact with each other and disposed in the empty space of the elastic body.

12. The stylus pen of claim 10 or 11, wherein the fixing bracket comprises a pair of electrode patterns disposed to face each other on an outer surface thereof,
the moving bracket comprises an electrode pattern that is brought into contact with or spaced apart from the pair of electrode patterns according to a movement of the core body,
the elastic body is made of a conductive material,
one end of the elastic body is connected to the electrode pattern of the moving bracket,
the other end of the elastic body is connected to a first terminal of the substrate, and
the pair of electrode patterns of the fixing bracket are connected to second and third terminals of the substrate, respectively.

13. The stylus pen of any of claims 10 to 12, wherein the capacitor unit comprises at least one capacitor and an auxiliary capacitor connected in parallel to one end of the capacitor,
the first terminal is connected in series to the auxiliary capacitor, and
the second and third terminals are connected in parallel to the other end of the capacitor.

14. The stylus pen of claim 12 or 13, wherein the pair of electrode patterns on the fixing bracket are plated on grooves formed in the outer surface of the fixing bracket, and
the electrode patterns of the moving bracket are plated on grooves formed in the outer surface of the moving bracket.

15. The stylus pen of any of claims 12 to 14, wherein a resonance frequency of the resonant circuit is changed according to a movement of the moving bracket synchronized with a movement of the core body, and
a capacitance of the capacitor unit is changed more dominantly relative to an inductance of the inductor unit at a time when a hover state and a contact state of the stylus pen are distinguished.
